(19) Europäisches Patentamt

European Patent Office

Office européen des brevets

(11) Publication number: **0 327 550 B1**

# (12) EUROPEAN PATENT SPECIFICATION

(45) Date of publication of patent specification :
**18.12.91 Bulletin 91/51**

(21) Application number: **87906755.1**

(22) Date of filing : **19.10.87**

(86) International application number:
**PCT/GB87/00733**

(87) International publication number:
**WO 88/03234 05.05.88 Gazette 88/10**

(51) Int. Cl.⁵ : **F16D 25/08**

(54) **A HYDRAULIC ACTUATOR FOR A CLUTCH.**

(30) Priority : **22.10.86 US 921762**
**18.02.87 GB 8703722**

(43) Date of publication of application :
**16.08.89 Bulletin 89/33**

(45) Publication of the grant of the patent :
**18.12.91 Bulletin 91/51**

(84) Designated Contracting States :
**DE FR IT**

(56) References cited :
**DE-A- 2 923 487**
**FR-A- 2 082 870**
**FR-A- 2 194 263**
**FR-A- 2 395 429**
**GB-A- 2 174 169**

(56) References cited :
**US-A- 2 089 472**
**US-A- 2 550 373**
**US-A- 2 717 680**
**US-A- 3 045 790**

(73) Proprietor : **AUTOMOTIVE PRODUCTS PLC**
**Tachbrook Road**
**Leamington Spa Warwickshire CV31 3ER (GB)**

(72) Inventor : **LEIGH-MONSTEVENS, Keith, V.**
**5622 Larkins Drive**
**Troy, MI 48098 (US)**
Inventor : **WROBLESKI, David, L.**
**31554 Slumber Lane**
**Fraser, MI 48026 (US)**

(74) Representative : **Adkins, Michael**
**4 Dyer's Buildings Holborn**
**London EC1N 2JT (GB)**

## Description

The invention is concerned with an hydraulic clutch actuator according to the preamble of claim 1 and known from FR-A-2395429.

An hydraulic clutch actuator for motor vehicles comprises a selectively displaceable element which is associated with a release member of the clutch assembly to separate two rotatable elements of the clutch, which rotatable elements are normally frictionally coupled to transfer energy from the engine crank shaft to the transmission input shaft. The actuator is the slave portion of an hydraulic master cylinder/slave cylinder assembly wherein the master cylinder is mounted to be directly operated by the clutch pedal.

As is well-known, the release member of the clutch rotates at engine speed when the clutch is engaged. The actuator, on the other hand, is principally non rotating; i.e. the body of the actuator is secured against rotation to a structural component such as the transmission housing or the clutch housing. Therefore, the clutch actuator must be connected to the release member through a bearing, commonly called a "release" or "throw-out" bearing.

The actuator can be mounted off axis relative to the transmission input shaft or it can be mounted concentrically. The off axis arrangement involves a lever arm connected between an output element of the actuator and the clutch release member. The typical concentric arrangement requires no such lever arm. Instead, the cylinder body of the actuator is fixed to a bell housing of the clutch or to the face of the transmission housing and an axially translatable piston of the actuator is associated with one race of the throwout bearing. The other race is, in turn, assembled with the clutch release member.

Examples of concentric actuator arrangement are shown in the british patent Application GB 2,046,864A published in Great britain on November 19, 1989, and in U.S. patent No.4,585,108 issued April 19, 1986. The former shows a concentric pull-type actuator.

Installation of the device of the aforementioned U.S. Patent No.4,585,108 requires clamping a radial extension of the slave cylinder body between the transmission housing and the clutch bell housing such that the internal piston moves axially to disengage the clutch through the throw-out bearing. The fixed radial extension contains the hydraulic fluid passage or passages which are connected by suitable hoses or lines to the master cylinder.

A further concentric actuator arrangement is shown in the aforementioned FR-A-2 395 429. In this specification an annular piston is slidable along an annular member having two sections of different diameters in engagement with complementary cylindrical bores in the piston. Such an arrangement can, however, give rise to concentricity problems during manufacture and inaccurate concentricity can affect not only the sealing between the piston and the member but also the ease of sliding movement of the piston on the member.

An object of the present invention is to provide an improved hydraulic concentric actuator for a clutch.

According to the invention there is provided an hydraulic actuator for a clutch having an axis of rotation and a release element, the actuator comprising a body defining an annular fluid chamber and having a fluid inlet to said chamber, means for mounting said body concentric to an axis of rotation of the clutch, piston means disposed at least in part within said annular chamber and concentric with said axis, and bearing means through which clutch release forces can be transmitted from said body to said release element, whereby admission of fluid under pressure to said annular fluid chamber causes said body to travel axially relative to said mounting means to operate the clutch, characterised in that the mounting means comprises a plurality of pins extending longitudinally of the axis and circumferentially spaced around said body, said pins permitting travel of said body along said axis.

Such an arrangement is useful in that the actuator can easily be located and mounted on the pins in concentric relationship with the input shaft of the transmission as an assembled unit ready to receive the clutch components and which offers both increased axial compactness and easier installation as advantages over the prior art, the pins serving both as mountings and guides for the body.

The actuator may include a master cylinder and at least one fluid line connecting the master cylinder with the fluid inlet to said annular chamber, at least a portion of said fluid line being flexible to accommodate the axial travel of said actuator body.

Preferably means is provided on the body which define apertures which slidably receive the pins. The means may comprise at least two circumferentially spaced radially extending webs on said actuator body. Bushing means may be disposed between said webs and said pins to facilitate sliding motion of the body relative to said pins.

Each of said pins may be formed with a fastening surface, typically a male screw thread, at one end.

The fastening surface is preferably used to secure each pin to a support such as a transmission housing.

Bias means such as compression springs may be provided to bias the body in one direction (preferably towards the release element) along the pins. The bias means may be carried by one or more of the pins.

With the present invention the actuator body translates axially during clutch release and engagement operations whereas the piston element and the associated seal are fixed. As a result, the cylinder body and not the piston is connected to the release element by way of the throw-out bearing.

An actuator in accordance with the invention will now be described by way of example with reference to the accompanying drawings in which:

Fig.1 is a side view, partially in section, of an hydraulic actuator system constructed and installed according to the present invention.

Fig.2 is a front view of the actuator in the installed condition; and

Fig.3 is an enlarged half section side view of the apparatus of Fig.1 showing additional details of the installation and locator pins.

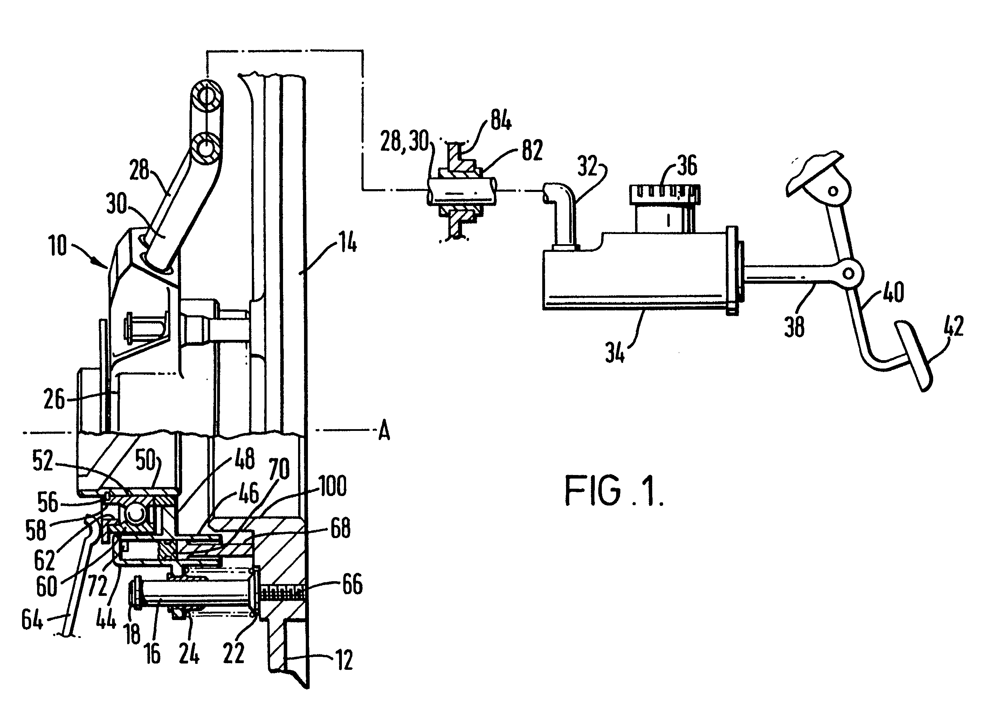

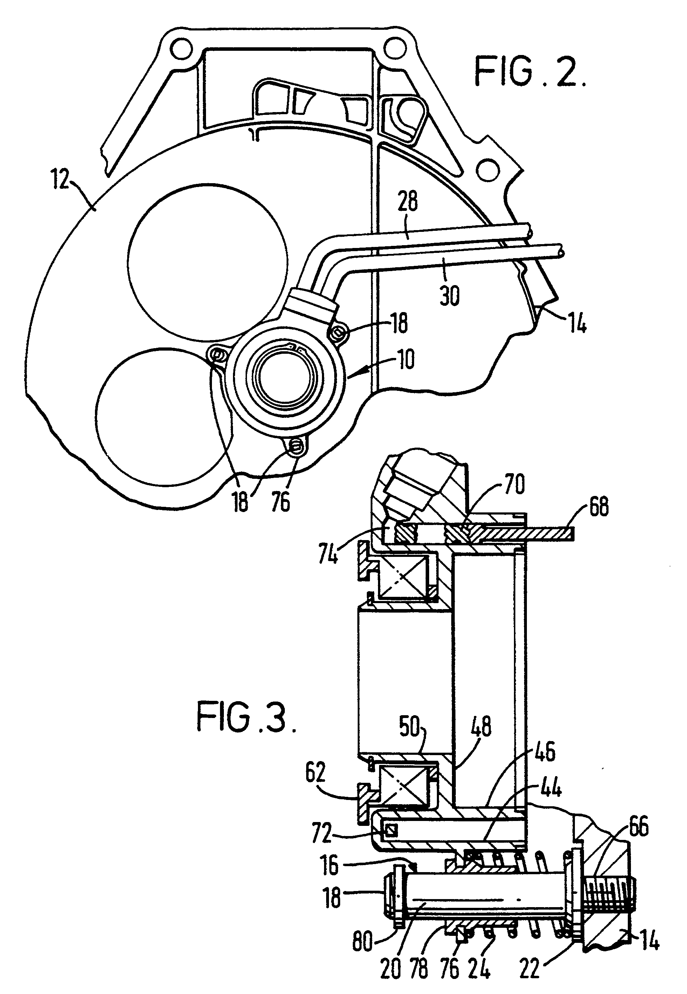

Referring to Figs.1 to 3, an hydraulic actuator 10 for an automotive vehicle (not shown) is installed on the front face 12 of a transmission housing 14 by means of a plurality of axially-orientated circumferentially spaced pins 16. The pins 16 have exposed ends 18 to which torque may be applied and threaded opposite ends 66 (Figures 1 and 3) which are screwed into the transmission housing 14. A shank portion 20 of each pin is shown terminating in a flange 22 of enlarged diameter which contains an actuator bias spring 24. In the installed condition, the flange 22 bears directly against the face of the transmission housing.

Actuator 10 comprises a cylinder body 26 which is axially displaceable on the pins 16 and which is fitted with a pair of hydraulic fluid lines 28 and 30. Line 28 is a supply line and is connected to the output line 32 of a master cylinder 34 having an integral fluid reservoir 36. Line 30 may be for bleeding purposes.

The master cylinder 34 has a steel input rod 38 which is pivotally connected to an arm 40 of a clutch pedal 42 in conventional fashion.

The actuator 10 is thus the slave cylinder to the master cylinder 34 whereby the release of an automotive vehicle clutch may be accomplished by depressing the pedal 42 for the purpose of making a gear change.

The assembly shown in Fig.1 including the reservoir 36, the master cylinder 34, the lines 28 and 30 and the actuator 10 are preferably precharged with hydraulic fluid prior to assembly thereof in a motor vehicle as is disclosed in greater detail in the U.S. Patents 4,407,125 and 4,503,678.

Although the embodiment of Figs.1 and 2 show three locator and installation pins 16 parallel with the Axis A of the engine, transmission and actuator assembly, it will be appreciated by those skilled in the art that other arrangements embodying 2, 4 or more pins may also be employed.

The actuator body 26 comprises a sectionally U-shaped cylinder portion comprising an outer annular leg 44 and an inner annular leg 46, the annular space between the two legs 44 and 46 forming a chamber for hydraulic fluid as hereinafter described. Leg 46 is integral with a radial web section 48 which is axially fast with a tubular portion 50, the latter being concentric with the axis A of the engine and transmission as previously explained. The inner diameter of the inner annular leg 46 is such as to allow the inner leg to pass with working clearance over a tubular extension 100 on the housing 14.

The body 26, which is susceptible of translation back and forth along the axis A, is fixed to the inner race 52 of a throw-out bearing, a clip 56 and a spring washer 58 being provided for the purpose of preloading the bearing. The outer race 60 of the bearing is axially fixed to a sectionally L-shaped flange member 62 which operates in direct contact with the clutch release element 64, in this case shown as one of several fingers of a diaphragm-type spring, the leftward movement of which as shown in Fig.1 is operative to disengage or release the clutch. As previously described, the body 26 is slidably mounted on the pins 16 and the pins have threaded ends 66 which are received by and into tapped holes in the transmission housing 14 when the actuator 10 is installed.

The actuator 10 further comprises a piston 68 of cylindrical configuration which is received at least in part between the legs 44 and 46 of the slave cylinder body 26 to close the chamber formed between the legs 44 and 46. A seal 70 is attached to the inner periphery of the piston 68 to prevent the leakage of hydraulic fluid under pressure past the side surfaces of the piston 68 which slide on the inner walls of the legs 44 and 46. Piston 68 bears on its exposed right side against the transmission housing 14 when installed. A ring-shaped plastic element 72 is fixed within the cylinder body 26 between the legs 44 and 46 at the right portion thereof to prevent excessive travel between the seal 70 and the body to the extent that the seal might be torn or worn by sharp edges on the inlet ends 74 of the fluid lines 28 and 30 as they enter the chamber previously defined.

Fig.3 shows the details of the pins 16 and the relationship between the pins 16 and the body 26 of the actuator 10. The body 26 is provided with web-like radial flanges 76 which receive plastic bushings 78. The bushings 78 receive the shanks 20 of the pins 16 to permit the body 26 to slide freely axially back and forth along the pins 16. Springs 24 are trapped between flanges 76 and the flanges 22 when the pins are held in place by the bushings 78. Clips 80 near the heads 18 of the pins 16 prevent the assembly from escaping at the leftward end, as shown in the figures, while, prior to mounting of the assembly on housing 14, the flanges 22 prevent the assembly from escaping from the rightward ends of the pins. The threaded exposed ends (prior to installation) 66 of the pins 16 are also shown in detail in Fig.3. The springs 24 bias the actuator 10 towards the release element 64 and cause the flange member 62 and release element 64 to be maintained in contact with each other.

Fig.1 shows lines 28 and 30 mounted in an open-all foam fitting 82 in the clutch housing 84 to prevent chafing of the lines 28, 30 due to movement with the actuator body 26 during normal operation.

As previously stated, the preferred mode of operation is to assemble, fill, bleed and seal the entire hydraulic system of the actuator 10 prior to assembly thereof with a motor vehicle. This hydraulic combination which is pre-charged, bled and sealed comprises the master cylinder 34, the integral reservoir 36, the lines 28, 30, 32 and the slave cylinder 44, 46 represented by the actuator 10. The actuator 10 is then assembled in the motor vehicle before coupling the engine/clutch assembly to the transmission housing 14 and driving the pins home by application of a power wrench. This may be facilitated by compressing the springs 24 to expose more of the shank portions of pins 16 and applying the power wrench to the heads 18 of the pins. Except for the otherwise conventional assembly of the clutch to the actuator and the transmission, the installation is at this point essentially complete.

Operation of the actuator itself is as follows. The clutch is biased, in this case by the spring fingers 64 of the release element, to the engaged position. When the clutch pedal 42 is depressed urging the rod 38 into the master cylinder 34, fluid is driven under pressure through lines 30, 32 to the annular chamber defined by the legs 44 and 46 of the slave cylinder body 26 and the cylindrical piston 68. Increased fluid pressure in this chamber drives the cylinder body leftward as shown in Figs.1 and 3 as the piston 68 is prevented from moving by the transmission housing 14. The outer race 60 of throw-out bearing 54 permits the L-shaped flange member 62 to rotate with the fingers 64 representing the clutch release elements for as long as is necessary. The inherent flexibility of the lines 28, 30, 32 permits the body 26 to move axially back and forth during release and re-engagement operations without detriment of any kind to the hydraulic system.

## Claims

1. An hydraulic actuator (10) for a clutch having an axis of rotation (A) and a release element (64), the actuator comprising a body (26) defining an annular fluid chamber and having a fluid inlet (74) to said chamber, means (16) for mounting said body (26) concentric to said axis of rotation (A), piston means (68) disposed at least in part within said annular chamber and concentric with said axis (A), and bearing means (52, 60) through which clutch release forces can be transmitted from said body (26) to said release element (64), whereby admission of fluid under pressure to said annular fluid chamber causes said body (26) to travel axially relative to said mounting means (16) to operate the clutch, characterised in that the mounting means comprises a plurality of pins (16) extending longitudinally of the axis (A) and circumferentially spaced around said body (26), said pins permitting travel of said body (26) along said axis (A).

2. An actuator according to Claim 1 characterised in that at least one fluid line (28) is provided connecting a master cylinder (34) with the fluid inlet (74) to said annular chamber, at least a portion of said fluid line (28) being flexible to accommodate the axial travel of said actuator body (26).

3. An actuator according to Claim 1 or 2 characterised in that means (76) is provided on the body (26) which define apertures which slidably receive the pins (16).

4. An actuator according to Claim 3 characterised in that the means comprises at least two circumferentially spaced radially extending webs (76) on said actuator body (26).

5. An actuator according to Claim 4 characterised in that bushing means (78) is disposed between said webs (76) and said pins (16) to facilitate sliding motion of said body (26) relative to said pins (16).

6. An actuator according to any preceding Claim characterised in that each of said pins (16) is formed with a fastening surface (66) at one end.

7. An actuator according to Claim 6 characterised in that the fastening surface (66) secures each pin (16) to a support (14).

8. An actuator according to any preceding Claim characterised in that bias means (24) is provided to bias the body (26) in one direction along said pins (16).

9. An actuator according to Claim 8 characterised in that the bias means (24), in use, urges the body (26) towards the release element (64).

10. An actuator according to Claim 8 or 9 characterised in that said bias means (24) is carried by one or more of said pins (16).

11. An actuator according to any preceding Claim characterised in that the actuator (10) is in a vehicle having a clutch, a clutch housing and a release element (64) which forms a portion of said clutch, said clutch and clutch housing having said axis of rotation (A).

## Patentansprüche

1. Hydraulische Betätigungsvorrichtung (10) für eine Kupplung, die eine Drehachse (A) und ein Ausrückelement (64) hat, wobei die Betätigungsvorrichtung folgendes umfaßt: ein Gehäuse (26), das eine ringförmige Flüssigkeitskammer begrenzt und einen Flüssigkeitseingang (74) zu der Kammer hat, Mittel (16) zum Befestigen des Gehäuses (26) konzentrisch zu der Drehachse (A), eine Kolbeneinrichtung (68), die wenigstens teilweise innerhalb der ringförmigen Kammer angeordnet und konzentrisch zu der Achse (A) ist, und eine Lagereinrichtung (52, 60), über die Kupplungsausrückkräfte von dem Gehäuse (26) auf das Ausrückelement (24) übertragen werden können, wodurch der Einlaß von Druckflüssigkeit in die ringförmige Flüssigkeitskammer bewirkt, daß sich das Gehäuse (26) axial relativ zu den Befestigungsmitteln (16) bewegt, um die Kupplung zu betätigen, dadurch gekennzeichnet, daß die Befestigungsmittel eine Vielzahl an Stiften (16) umfaßt, die sich längs zu der Achse (A) erstrecken und in Umfangsrichtung um das Gehäuse (26) herum beabstandet sind, wobei die Stifte die Bewegung des Gehäuses (26) entlang der Achse (A) gestatten.

2. Betätigungsvorrichtung nach Anspruch 1, dadurch gekennzeichnet, daß mindestens eine Flüssigkeitsleitung (28) vorgesehen ist, die einen Geberzylinder (24) mit dem Flüssigkeitseingang (74) zu der ringförmigen Kammer verbindet, wobei mindestens ein Teil der Flüssigkeitsleitung (28) flexibel ist, um die axiale Bewegung des Betätigungsgehäuses (26) zu ermöglichen.

3. Betätigungsvorrichtung nach Anspruch 1 oder 2, dadurch gekennzeichnet, daß Mittel (76) an dem Gehäuse (26) vorgesehen sind, welche Öffnungen begrenzen, die die Stifte (16) gleitbar aufnehmen.

4. Betätigungsvorrichtung nach Anspruch 3, dadurch gekennzeichnet, daß die Mittel mindestens zwei in Umfangsrichtung beabstandete radial sich erstreckende Stege (76) an dem Betätigungsgehäuse (26) umfassen.

5. Betätigungsvorrichtung nach Anspruch 4, dadurch gekennzeichnet, daß eine Büchseneinrichtung (78) zwischen den Stegen (76) und den Stiften (16) angeordnet ist, um die Gleitbewegung des Gehäuses (26) relativ zu den Stiften (16) zu erleichtern.

6. Betätigungsvorrichtung nach irgendeinem vorhergehenden Anspruch, dadurch gekennzeichnet, daß jeder der Stifte (16) eine Befestigungsfläche (66) an einem Ende hat.

7. Betätigungsvorrichtung nach Anspruch 6, dadurch gekennzeichnet, daß die Befestigungsfläche (66) jeden Stift (16) an einem Träger (14) sichert.

8. Betätigungsvorrichtung nach irgendeinem vorhergehenden Anspruch, dadurch gekennzeichnet, daß eine Vorspanneinrichtung (24) vorgesehen ist, um das Gehäuse (26) in einer Einrichtung entlang der Stifte (16) vorzuspannen.

9. Betätigungsvorrichtung nach Anspruch 8, dadurch gekennzeichnet, daß die Vorspanneinrichtung (24) im Gebrauch das Gehäuse (26) in Richtung des Einrückelements (64) drängt.

10. Betätigungsvorrichtung nach Anspruch 8 oder 9, dadurch gekennzeichnet, daß die Vorspanneinrichtung (24) von einem oder mehreren der Stifte (16) getragen wird.

11. Betätigungsvorrichtung nach irgendeinem vorhergehenden Anspruch, dadurch gekennzeichnet, daß die Betätigungsvorrichtung (10) in einem Fahrzeug ist, das eine Kupplung, ein Kupplungsgehäuse und ein Ausrückelement (64) hat, das einen Teil der Kupplung bildet, wobei die Kupplung und das Kupplungsgehäuse die Drehachse (A) haben.

## Revendications

1. Actionneur hydraulique (10) pour embrayage comportant un axe de rotation (A) et un organe de débrayage (64), l'actionneur comprenant un corps (26) délimitant une chambre à fluide annulaire et ayant un orifice (74) d'entrée de fluide dans ladite chambre, des moyens (16) pour monter le corps (26) concentriquement audit axe de rotation (A), un piston (68) disposé au moins en partie à l'intérieur de ladite chambre annulaire et concentriquement audit axe (A), et des roulements (52,60) par l'intermédiaire desquels des forces de débrayage de l'embrayage peuvent être transmises dudit corps (26) audit organe de débrayage (64), grâce à quoi l'admission d'un fluide sous pression dans ladite chambre à fluide annulaire astreint le corps (26) à se déplacer axialement par rapport aux organes de montage (16) pour actionner l'embrayage, caractérisé en ce que les moyens de montage comprennent plusieurs broches (16) s'étendant longitudinalement par rapport à l'axe (A) et espacées circonférentiellement autour dudit corps (26), lesdites broches permettant un déplacement du corps (26) le long dudit axe (A).

2. Actionneur suivant la revendication 1, caractérisé en ce qu'il est prévu au moins un conduit de fluide (28) reliant un maître-cylindre (34) à l'orifice (74) d'entrée de fluide dans ladite chambre annulaire, au moins une partie dudit conduit de fluide (28) étant souple pour compenser le déplacement axial dudit corps (26) de l'actionneur.

3. Actionneur suivant la revendication 1 ou 2, caractérisé en ce que des moyens (76) sont prévus sur le corps (26), qui délimitent une ouverture qui reçoit les broches (16) de façon coulissante.

4. Actionneur suivant la revendication 3, caractérisé en ce que lesdits moyens comprennent au moins deux bras (76) s'étendant radialement et espacés circonférentiellement sur ledit corps (26) de l'actionneur.

5. Actionneur suivant la revendication 4, caractérisé en ce que des douilles (78) sont disposées entre lesdits bras (76) et les broches (16) pour faciliter le mouvement de coulissement du corps (26) par rapport aux broches (16).

6. Actionneur suivant l'une quelconque des revendications précédentes, caractérisé en ce que chacune desdites broches (16) présente une surface de fixation (66) à une extrémité.

7. Actionneur suivant la revendication 6, caractérisé en ce que ladite surface de fixation (66) fixe chaque broche (16) sur un support (14).

8. Actionneur suivant l'une quelconque des revendications précédentes, caractérisé en ce que des moyens de sollicitation (24) sont prévus pour solliciter le corps (26) dans une direction le long des broches (16).

9. Actionneur suivant la revendication 8, caractérisé en ce que les moyens de sollicitation (24) sollicitent le corps (26), en service, vers l'organe de débrayage (64).

10. Actionneur suivant la revendication 8 ou 9, caractérisé en ce que les moyens de sollicitation (24) sont portés par une ou plusieurs desdites broches (16).

11. Actionneur suivant l'une quelconque des revendications précédentes, caractérisé en ce que l'actionneur (10) est disposé dans un véhicule comportant un embrayage, un carter d'embrayage et un organe de débrayage (64) qui constituent une partie dudit embrayage, l'embrayage et le carter de l'embrayage comportant ledit axe de rotation (A).

FIG .1.

FIG . 2.

FIG .3.